# FASCICULE DE BREVET EUROPEEN

(11) **EP 1 886 514 B1**
(45) Date de publication et mention de la délivrance du brevet: **15.09.2010**
(21) Numéro de dépôt: 06764843.6
(22) Date de dépôt: 06.06.2006
(51) Int. Cl.: H04W 4/10

(54) **SYSTEME ET PROCEDE DE TELECOMMUNICATION EN MODE PTT, MODULE DE GESTION, SERVEUR, TERMINAL ET PROGRAMME POUR CE SYSTEME**
TELEKOMMUNIKATIONSVERFAHREN IM PTT-MODUS UND SYSTEM, VERWALTUNGSMODUL, SERVER, ENDGERÄT UND PROGRAMM FÜR DAS SYSTEM
PTT MODE TELECOMMUNICATION METHOD AND SYSTEM, MANAGEMENT MODULE, SERVER, TERMINAL AND PROGRAM FOR SAID SYSTEM

(30) Priorité: 03.06.2005 FR 0505651
(43) Date de publication de la demande: 13.02.2008
(73) Titulaire: FRANCE TELECOM, 75015 Paris (FR)
(72) Inventeur: MIENVILLE, Thibaud, F-75015 Paris (FR); ANZA, Diego, F-75015 Paris (FR); PICHELIN, Aude, F-92130 Issy Les Moulineaux (FR)
(86) Numéro de dépôt international: PCT/FR2006/050521
(87) Numéro de publication internationale: WO 2006/129048

(56) Documents cités:
- WO-A-2004/075581
- US-A1- 2002 094 831

## Description

La présente invention concerne un système et un procédé de télécommunication en mode PTT, un module de gestion, des serveurs, un programme et un support d'enregistrement pour ce système.

De façon simplifiée, un système ou un procédé de communication en mode PTT (Push-to-talk) permet d'établir une session PTT. La session PTT permet à deux ou plusieurs participants d'utiliser leurs terminaux de téléphonie comme un talkie-walkie. Les liaisons entre les différents participants sont alors en mode half-duplex. Lorsqu'un participant A souhaite prendre la parole, il enfonce une touche de son terminal et la maintient enfoncée tant qu'il parle. Pendant ce temps, les autres participants ne peuvent qu'écouter. Lorsque le participant A relâche la touche, ses paroles ne sont plus transmises aux autres participants. L'un quelconque des autres participants B ou C peut alors prendre la parole en enfonçant la touche correspondante de son terminal.

Les systèmes existants de communication en mode PTT comportent :
des terminaux sans fil utilisables sous la commande d'un utilisateur pour participer à une session Push-to-talk, et
   - un serveur Push-to-talk raccordé aux terminaux par l'intermédiaire d'un réseau sans fil, ce serveur étant apte à gérer ladite session Push-to-talk.

Ces systèmes fonctionnent correctement. Toutefois, le réseau d'accès et le terminal utilisé par chaque participant peuvent être différents, de sorte que les niveaux de qualité des services de télécommunication possibles ou choisis par chaque participant sont différents.

Le niveau de qualité perçu par l'utilisateur d'un service de télécommunication est ici défini comme étant l'aptitude du terminal et du réseau d'accès à restituer sans détérioration les paroles prononcées par l'utilisateur dans son terminal, la rapidité à laquelle les paroles prononcées sont acheminées par le terminal et le réseau d'accès jusqu'au serveur PTT et/ou le temps nécessaire à l'établissement de la session push-to-talk ou pour prendre la parole dans une session établie. Cette rapidité s'exprime souvent par un temps de latence. Plus ce temps de latence est petit, plus la rapidité de transmission des paroles prononcées est élevée.

Ces critères concourent et illustrent la manière avec laquelle la qualité de service est perçue par l'utilisateur au niveau applicatif.

Dès lors, lors d'une session PTT, les participants A et B peuvent utiliser un très bon niveau de qualité, alors que le participant C à la même session PTT peut utiliser un niveau de qualité médiocre. Dans ces conditions, quand les participants A et B écoutent le participant C parler, les paroles prononcées par le participant C sont mal restituées et peuvent présenter un temps de latence important puisque celles-ci sont acheminées par le terminal et le réseau d'accès du participant C. Ainsi, les participants A et B perçoivent un faible niveau de qualité lorsque le participant C parle alors qu'ils payent au contraire pour bénéficier d'un bon niveau de qualité. Ceci peut s'avérer désagréable pour les participants A et B.

WO2004/075581 A1 décrit un système permettant l'établissement et le maintient d'une session PTT dans le cas ou la qualité de service de la connexion des participants fluctue. Ce document décrit par exemple que lorsqu'une session PTT a été établie, le codage utilisé peut être adapté à des conditions défavorables, que le serveur PTT peut adapter les données transmises à un terminal ayant une mauvaise qualité de réception ou bien que le serveur PTT peut exclure de la session PTT un terminal ayant une mauvaise qualité de communication. La qualité de service disponible n'est en revanche pas prise en compte lors de l'établissement de la session PTT.

L'invention vise à remédier à cet inconvénient en proposant un système de communication en mode PTT qui peut éviter aux participants d'une session PTT de percevoir au

niveau applicatif les conséquences d'une hétérogénéité des niveaux de qualité des services de télécommunication utilisés par chacun des participants.

L'invention a donc pour objet un système de télécommunication en mode PTT comportant un module de gestion apte à sélectionner un mode de participation restreinte à ladite session Push-to-talk lors de l'établissement de ladite session Push-to-talk en fonction d'un niveau de qualité de service disponible ou choisi et d'un niveau de qualité de service prédéfini pour ladite session Push-to-talk.

Le module de gestion peut permettre de restreindre la participation d'un utilisateur en fonction du niveau de qualité disponible ou choisi par cet utilisateur pour participer à la session PTT. Dès lors, les autres participants perçoivent moins et sont moins gênés par le mauvais niveau de qualité du service de télécommunication utilisé par l'un des participants. Ceci rend la session PTT plus agréable pour les autres participants.

Dans un mode de réalisation, le mode de participation restreinte consiste en une interdiction à un utilisateur de prendre la parole pendant ladite session Push-to-talk. Ceci a l'avantage que l'utilisateur dont la participation est restreinte ne pourra pas prendre la parole.

Les modes de réalisation de ce système peuvent comporter une ou plusieurs des caractéristiques suivantes :
- ladite interdiction permet audit utilisateur dont la prise de parole a été interdite à écouter des participants à la session Push-to-talk ;
- le module de gestion est apte à comparer un niveau actuel de qualité de service utilisé par l'utilisateur au niveau prédéfini et à interdire automatiquement la prise de parole par cet utilisateur si le niveau actuel de qualité acquis est inférieur au niveau prédéfini ;
- le module de gestion est apte à comparer le niveau actuel de qualité de service utilisé par l'utilisateur au niveau prédéfini et à interdire la prise de parole par cet utilisateur si le niveau actuel de qualité acquis est inférieur au niveau prédéfini et en réponse à une instruction de rejet transmise par l'un des participants à la session Push-to-talk ;
- ledit mode de participation restreinte consiste à interdire un ajout d'un utilisateur à une définition d'un groupe de participants à ladite session Push-to-talk si le niveau de qualité de service disponible ou choisi est inférieur au niveau prédéfini pour ladite session Push-to-talk.

Les modes de réalisation du système présentent en outre les avantages suivants :
- l'autorisation donnée à l'utilisateur d'écouter les participants à la session PTT sans pouvoir prendre la parole permet de maintenir un niveau de qualité élevé entre les participants sans exclure totalement ceux qui ne disposent pas d'un niveau de qualité aussi élevé ;
- la comparaison du niveau actuel de qualité disponible ou choisi par chaque utilisateur au niveau prédéfini lors de l'établissement de chaque session PTT permet de réactualiser les conditions d'accès à la session PTT pour chaque participant ;
- interdire l'ajout d'un utilisateur à un groupe de participants à une session PTT permet d'empêcher cet utilisateur de participer à cette session PTT.

L'invention a également pour objet
- un module de gestion adapté pour être mis en oeuvre dans un système de télécommunication, caractérisé en ce qu'il est apte à sélectionner un mode de participation restreinte à une session Push-to-talk lors l'établissement de ladite session Push-to-talk en fonction d'un niveau de qualité de service disponible ou choisi et d'un niveau de qualité de service prédéfini pour ladite session Push-to-talk,
- un serveur Push-to-talk, caractérisé en ce qu'il est apte à transmettre un niveau de qualité de service prédéfini à des terminaux des utilisateurs souhaitant participer à une session Push-to-talk et
- un serveur d'administration de groupes adapté pour être mis en oeuvre dans un système de télécommunication, caractérisé en ce qu'il est apte à créer des définitions de groupes de participants à une session Push-to-talk, lesdites définitions contenant un niveau de qualité de service prédéfini.

L'invention a également pour objet un procédé de communication ce procédé mettant en oeuvre:
- des terminaux sans fil utilisables sous la commande d'un utilisateur pour participer à une session Push-to-talk, et
- un serveur Push-to-talk raccordé aux terminaux par l'intermédiaire d'un réseau sans fil, ce serveur étant apte à gérer ladite session Push-to-talk,
caractérisé en ce que ce procédé comporte une étape de sélection d'un mode de participation restreinte à ladite session Push-to-talk lors de l'établissement de ladite session Push-to-talk en fonction d'un niveau de qualité de service disponible ou choisi et d'un niveau de qualité de service prédéfini pour ladite session Push-to-talk.

Les modes de réalisation de ce procédé peuvent comporter une ou plusieurs des caractéristiques suivantes :
- ledit mode de participation restreinte consiste en une interdiction à un utilisateur de prendre la parole pendant la session Push-to-talk ;
- ladite interdiction permet audit utilisateur dont la prise de parole a été interdite à écouter les autres utilisateurs participant à la session Push-to-talk ;
- le procédé comporte :
   - une étape de comparaison du niveau actuel de qualité du service utilisé par l'utilisateur au niveau prédéfini, et
   - si le niveau actuel de qualité est inférieur au niveau prédéfini, l'étape de sélection d'un mode de participation restreinte est automatiquement exécutée ;
- le procédé comporte :
   - une étape de comparaison du niveau actuel de qualité du service utilisé par l'utilisateur au niveau prédéfini, et
   - si le niveau actuel de qualité est inférieur au niveau prédéfini, l'étape de sélection d'un mode de participation restreinte est exécutée en réponse à une instruction de rejet émise par l'un des participants à la session Push-to-talk ;
- ledit mode de participation restreinte consiste à interdire un ajout d'un utilisateur à une définition d'un groupe de participants à ladite session Push-to-talk si le niveau de qualité de service disponible ou choisi pour participer à ladite session est inférieur au niveau prédéfini.

L'invention a également pour objet
- un programme d'ordinateur, caractérisé en ce qu'il comporte des instructions pour l'exécution d'un procédé comme décrit ci-dessus, lorsque lesdites instructions sont exécutées par un ordinateur ;
- un serveur comportant un module de gestion caractérisé en ce que ledit module est apte à sélectionner un mode de participation restreinte à une session Push-to-talk lors l'établissement de ladite session Push-to-talk en fonction d'un niveau de qualité de service disponible ou choisi et un niveau de qualité de service prédéfini pour ladite session Push-to-talk et
- un terminal comportant un module de gestion caractérisé en ce que ledit module est apte à sélectionner un mode de participation restreinte à une session Push-to-talk lors l'établissement de ladite session Push-to-talk en fonction d'un niveau de qualité de service disponible ou choisi et un niveau de qualité de service prédéfini pour ladite session Push-to-talk et
- un terminal comme décrit ci-dessus, caractérisé en ce que ledit module est apte a lire ledit niveau de qualité de service d'une mémoire.

L'invention sera mieux comprise à la lecture de la description qui va suivre, donnée uniquement à titre d'exemple et faite en se référant aux dessins sur lesquels :
- la figure 1 est une illustration schématique de l'architecture d'un système de télécommunication en mode PTT ;
- la figure 2 est un organigramme d'un procédé de télécommunication en mode PTT ;
- la figure 3 est une illustration schématique de l'architecture d'un autre système de télécommunication en mode PTT ; et
- la figure 4 est un organigramme d'un autre procédé de télécommunication en mode PTT.

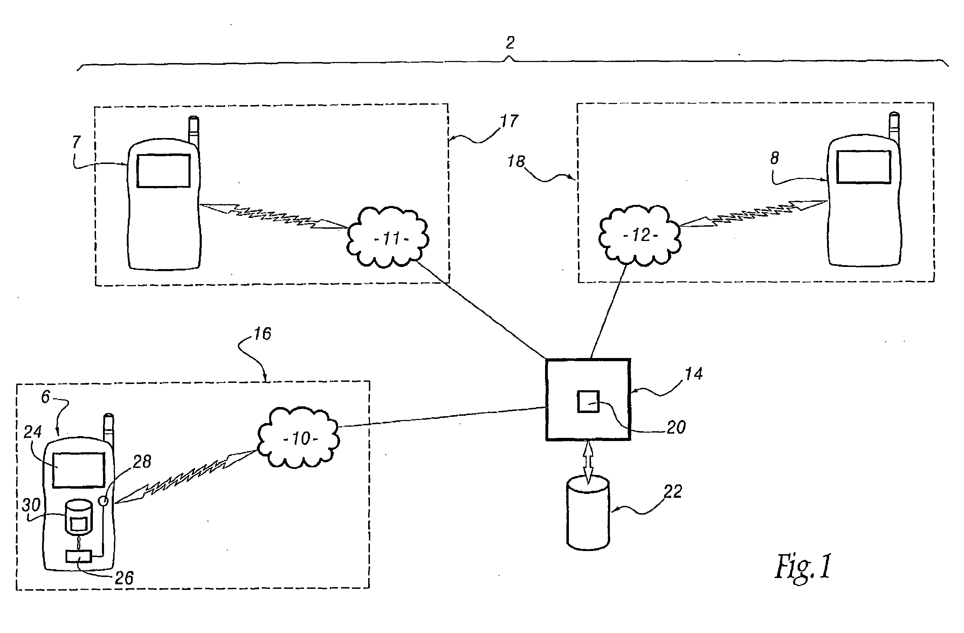

La figure 1 représente un système 2 de télécommunication en mode PTT basé sur un réseau de téléphonie sans fil cellulaire. L'architecture générale de ces systèmes, connus sous le terme de système « PoC » (Push-to-talk over Cellular), a par exemple été divulguée dans des projets de normalisation définis par l'OMA (Open Mobile Alliance). Ces systèmes sont basés sur les protocoles SIP (Session Initiation Protocol) et RTP (Real Time Protocol).

Sur la figure 1, seuls les éléments nécessaires pour comprendre l'invention sont représentés.

Le système 2, comprend plusieurs terminaux 6, 7, 8 de téléphonie sans fil utilisables pour participer à une session PTT.

Ici, à titre d'illustration, chacun des terminaux 6 à 8 est raccordé par un réseau d'accès respectif, respectivement 10, 11 et 12, à un serveur PTT 14.

Le réseau 10 est, par exemple, un réseau 3G (3^{ème} génération) de téléphonie mobile, tel que, par exemple, un réseau UMTS (Universal Mobile Télécommunication System).

Le réseau 11 est, par exemple, un réseau de 2G (2^{ème} génération) de téléphonie sans fil, tel que, par exemple, le réseau GSM (Global System for Mobile communications).

Le réseau 12 est un réseau local sans fil, tel qu'un réseau WiFi (Wireless Local Area Network).

Les réseaux coeurs n'ont pas été représentés sur la figure 1.

L'association du terminal et de son réseau d'accès est ici appelée moyen d'accès au serveur 14. Sur la figure 1, trois moyens d'accès 16 à 18 sont représentés correspondants respectivement à l'association du terminal 6 et du réseau 10, du terminal 7 et du réseau 11, et du terminal 8 et du réseau 12.

Le serveur 14 est apte à gérer l'établissement et le déroulement d'une session PTT entre les différents terminaux.

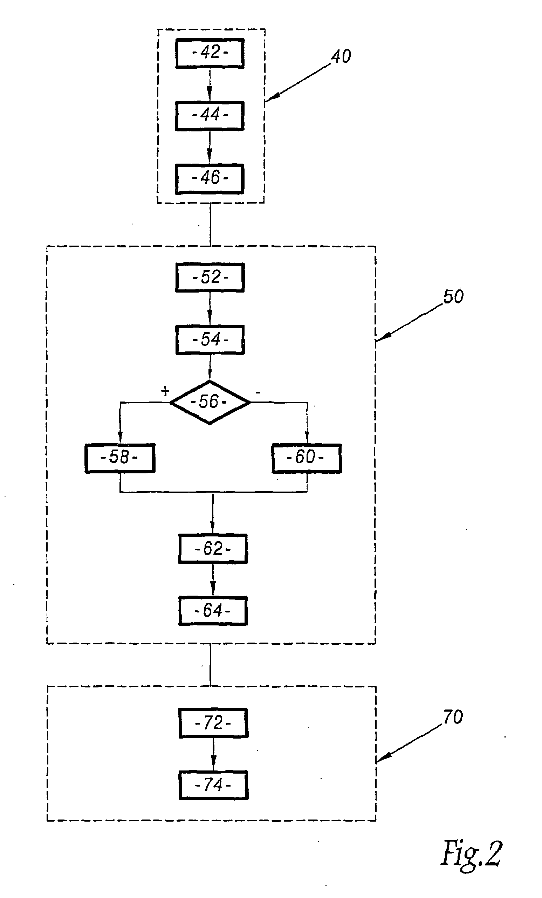

En particulier, il comporte ici un module 20 de pilotage propre à gérer des communications en mode Half-duplex entre les différents terminaux des participants à une session PTT. Les fonctions de ce module 20 seront décrites plus en détail en regard de la figure 2.

Le serveur 14 est, par exemple, réalisé à partir de calculateurs programmables conventionnels aptes à exécuter des instructions enregistrées sur un support d'enregistrement d'informations. A cet effet, une mémoire 22 raccordée au serveur 14 comporte des instructions pour l'exécution du procédé de la figure 2, lorsque ces instructions sont exécutées par le serveur 14.

Les terminaux 6 à 8 sont, par exemple, identiques et seul le terminal 6 sera donc décrit en détail.

Le terminal 6 est, par exemple, un téléphone mobile équipé d'une interface homme/machine 24 formée en outre d'un clavier et d'un écran.

Le terminal 6 comprend également un module 26 de gestion d'une session PTT. Ce module 26 est associé à une touche 28 du terminal 6 qui peut être enfoncée pour prendre la parole lors d'une session PTT. Le module 26 est apte à restreindre la participation d'un utilisateur à une session PTT en fonction du niveau de qualité des moyens d'accès utilisés par cet utilisateur et d'un niveau de qualité prédéfini au plus tard lors de l'établissement d'une session PTT.

Le terminal 6 est, par exemple, lui aussi réalisé à partir de calculateurs programmables conventionnels aptes à exécuter des instructions enregistrées sur un support d'enregistrement d'informations. A cet effet, il comporte une mémoire 30 contenant des instructions pour l'exécution du procédé de la figure 2 lorsque ces instructions sont exécutées par le calculateur électronique.

A titre d'illustration, le niveau de qualité disponible ou choisi par l'utilisateur pour participer à une session PTT est enregistré dans la mémoire 30.

Le niveau de qualité perçu par l'utilisateur est notamment fonction du réseau d'accès disponible (réseau à commutation de paquets, de circuits...), des profils de qualité de service utilisés et disponibles au niveau du réseau d'accès (tel que, par exemple, les classes de qualité de service UMTS).

Plusieurs types de niveau de qualité de service au niveau applicatif sont utilisables:
- niveau maximum autorisé pour un utilisateur par abonnement (donc dépendant des options d'abonnement que l'utilisateur a souscrit auprès de l'opérateur , exemple: abonnement professionnel, grand public, premium...)
- niveau de qualité défini lors de l'établissement de la session PTT soit par l'utilisateur lui-même sur son terminal ou à défaut sur la base des caractéristiques de son abonnement s'il ne donne pas d'indication ;
- niveau de qualité disponible à l'instant t actuel dépendant de l'abonnement mais également du(des) réseau(x) d'accès disponible(s), des ressources réseaux disponibles, du type de terminal...
- niveau de qualité attribué à un groupe pour les opérations de gestions des participants.

Le fonctionnement du système 2 va maintenant être décrit à l'aide du procédé de la figure 2, dans le cas où un utilisateur A du terminal 6 souhaite communiquer en mode PTT avec des utilisateurs B et C respectivement des terminaux 7 et 8.

Le procédé débute par une phase 40 de configuration du groupe de participants à la session PTT.

Lors de cette phase 40, lors d'une étape 42, l'utilisateur A sélectionne les numéros de téléphone des utilisateurs qu'il souhaite voir participer à la session PTT. Ici on suppose que les numéros de téléphone des terminaux 7 et 8 sont sélectionnés.

Ensuite, lors d'une étape 44, le module 26 sélectionne un niveau prédéfini de qualité minimale des services de télécommunication pour les moyens d'accès utilisés par les différents participants à la session PTT. Ici, ce niveau prédéfini est automatiquement sélectionné par le module 26 à partir d'informations concernant l'abonnement de l'utilisateur A. En variante, le niveau prédéfini peut être acquis par le terminal 6 par l'intermédiaire de l'interface homme/machine 24. Toujours en variante, ce niveau prédéfini peut être choisi égal par défaut au niveau actuel de qualité du moyen d'accès 16 utilisé par l'utilisateur A.

Lors d'une étape 46, un mode de participation restreinte est sélectionné par le module 26. Ici, il est sélectionné automatiquement par le module 26 en fonction des informations sur l'abonnement de l'utilisateur A. En variante, il peut être acquis par l'intermédiaire de l'interface 24.

Le mode de participation restreinte est un mode de participation qui limite le nombre de prises de parole et/ou la durée de ces prises de parole pour un participant utilisant un moyen d'accès dont le niveau de qualité du service de télécommunication est inférieur au niveau prédéfini de qualité.

Ici, on suppose que le mode de participation restreint sélectionné est un mode dans lequel un participant peut uniquement écouter sans jamais prendre la parole.

Ensuite, une phase 50 d'établissement de la session PTT entre les participants A à C est exécutée.

Lors de cette phase 50, lors d'une étape 52, le terminal 6 envoie au serveur 14 une instruction « SIP Invite » du protocole normalisé SIP. Le protocole SIP est un protocole de signalisation utilisé pour établir des liaisons de télécommunication entre plusieurs terminaux de téléphonie.

L'instruction « SIP Invite » contient en plus des informations spécifiant le média, le codec et la bande passante à utiliser, le niveau prédéfini de qualité ainsi qu'un identifiant du mode de participation restreinte sélectionnés lors des étapes 44 et 46. Ces informations supplémentaires, c'est-à-dire, le niveau prédéfini de qualité et l'identifiant du mode de participation restreinte sont, soit contenues dans l'entête de l'instruction « SIP Invite », soit contenues dans le corps de l'instruction.

Lors d'une étape 54, le serveur 14 retransmet l'instruction « SIP Invite » aux terminaux 7 et 8 par l'intermédiaire des réseaux d'accès 11 et 12 respectivement. Le module 26 de chacun des terminaux 7 et 8 compare, lors d'une étape 56, le niveau de qualité disponible ou choisi pour les moyens d'accès 17, 18 au niveau prédéfini reçu. Pour cela le niveau de qualité disponible ou choisi est acquis au préalable par le module 26. Par exemple, le module 26 lit le niveau de qualité disponible ou choisi dans la mémoire 30.

On suppose ici, que le niveau de qualité des moyens d'accès 17 est supérieur au niveau prédéfini, de sorte que le terminal 7 procède automatiquement à une étape 58 lors de laquelle il sélectionne le réseau 11 pour communiquer avec le serveur 14.

A titre d'exemple, les moyens d'accès 18 sont supposés présenter un niveau de qualité inférieur au niveau prédéfini de qualité reçu, de sorte que le module 26 du terminal 8 restreint automatiquement, lors d'une étape 60, la participation de l'utilisateur C à la session PTT qui va s'établir. Par exemple, le module 26 configure le terminal 8 pour que celui-ci ne puisse pas prendre la parole en désactivant, par exemple, la touche 28 de ce terminal.

Ensuite, lors d'une étape 62, les terminaux 7 et 8 confirment qu'ils vont participer à la session PTT initiée par l'utilisateur A en envoyant une instruction « SIP 200 OK » au serveur 14.

En réponse, lors d'une étape 64, le serveur 14 transmet une instruction « SIP 200 OK » au terminal 6 pour confirmer la participation des utilisateurs B et C.

Une fois la session PTT établie entre les utilisateurs A à C, ceux-ci deviennent des participants à la session et peuvent participer à une phase 70 de conversation en mode PTT.

Par exemple, au début de la phase 70, lors d'une étape 72, le participant A enfonce la touche 28 pour prendre la parole et la maintient enfoncée tant qu'il parle.

Ses paroles sont alors transmises aux terminaux 7 et 8 par l'intermédiaire des réseaux 10, 11 et 12. Lors de l'étape 72, les participants B et C peuvent uniquement écouter.

Lorsque le participant A a fini de parler, il relâche la touche 28.

Le participant B peut alors prendre la parole à son tour en enfonçant la touche' 28 de son terminal 7, lors d'une étape 74.

Par contre, le module 26 du terminal 8 empêche que le participant C puisse prendre la parole même si celui-ci enfonce la touche 28 de son terminal 8 au bon moment.

Ainsi, pendant la phase 70, les participants A et B peuvent uniquement parler en alternance en utilisant une liaison Half-duplex, tandis que le participant C ne peut que écouter les paroles prononcées soit par le participant A, soit par le participant B.

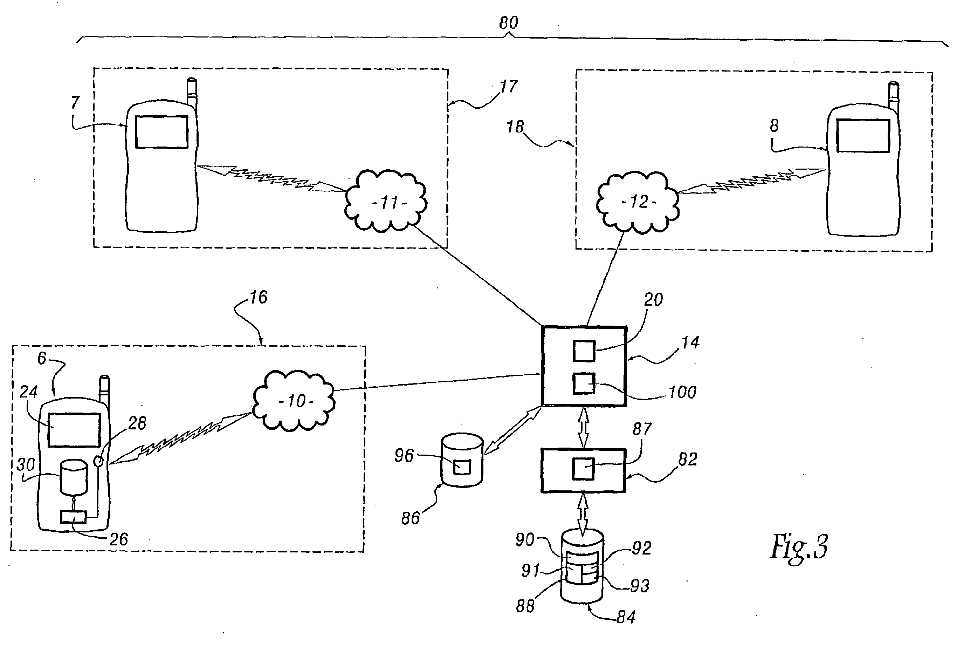

La figure 3 représente un autre système 80 de télécommunication en mode PTT. Le système 80 diffère du système 2 par la présence d'un serveur 82 d'administration de groupes et de mémoires 84, 86 associées respectivement au serveur 82 et au serveur PTT 14.

Sur la figure 3, les éléments déjà décrits en regard de la figure 1, portent les mêmes références numériques. Seuls les nouveaux éléments seront décrits en détail.

Le serveur 82 est propre à créer et à gérer des définitions de groupes de participants à des sessions PTT. A cet effet, il comprend un module 87 d'administration de groupes. Le serveur 82 est raccordé à la mémoire 84.

La mémoire 84 contient des définitions de groupes. Les définitions de groupes sont, par exemple, conformes pour les caractéristiques connues à celles décrites dans le document PoC XDM (XML Document Management) spécifié par l'OMA (OMA-TS-PoC XDM) en ce qui concerne les éléments standards de cette définition.

Une définition 88 d'un groupe X contient en outre un identifiant 90 du groupe et une liste 91 de participants à ce groupe. La définition 88 comprend ici en plus un champ 92 contenant le niveau prédéfini de qualité que doivent fournir les moyens d'accès et un identifiant 93 ou une définition 93 du mode de participation restreinte.

La mémoire 86 est raccordée au serveur 14 et comprend une base de données 96 contenant, associant à chaque utilisateur du système 80, le niveau de qualité des moyens d'accès qu'il utilise pour participer à une session PTT. Ce niveau de qualité enregistré dans la base de données 96 est un niveau de qualité défini a priori en fonction, par exemple, des caractéristiques de l'abonnement de l'utilisateur.

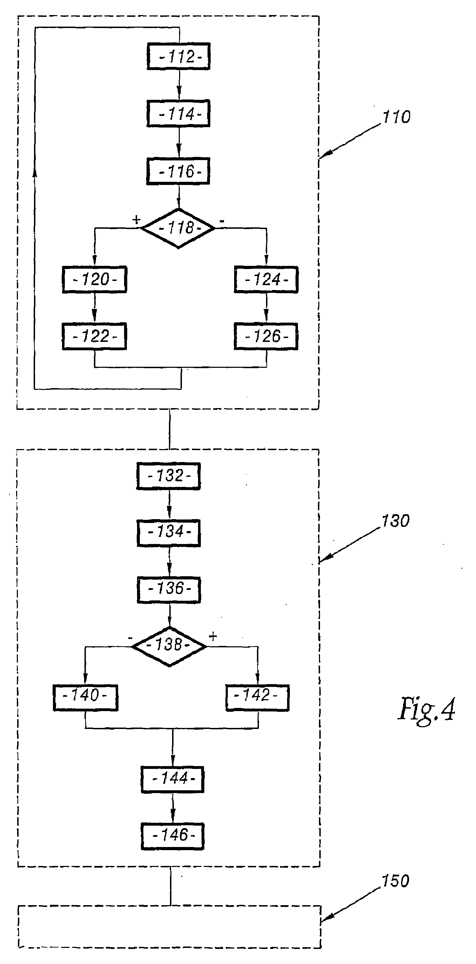

Le serveur 14 comporte en plus du module de pilotage 20, un module de gestion 100 dont les fonctions apparaîtront à la lecture de la description faite en regard de la figure 4.

Le fonctionnement du système 80 va maintenant être décrit en regard du procédé de la figure 4 et dans le cas particulier de l'établissement d'une session PTT à l'aide des moyens d'accès 16 à 18.

Initialement, au moins un groupe de participants doit être configuré, lors d'une phase 110. On suppose ici qu'un embryon de groupe de participants a déjà été créé conformément à ce qui est décrit dans le document PoC XDM.

Lors d'une étape 112, le ou un gestionnaire du groupe X envoie au serveur 14 une demande d'appartenance au groupe X de l'utilisateur A. Cette demande contient l'identifiant du groupe X.

Lors d'une étape 114, le module 100 interroge le serveur 82 pour obtenir le niveau prédéfini de qualité associé au groupe X.

Lors d'une étape 116, le serveur 82 transmet au module 100 le niveau prédéfini de qualité contenu dans la définition 88 du groupe X.

Lors d'une étape 118, le module 100 compare alors le niveau de qualité associé à l'utilisateur A dans la base de données 96 au niveau prédéfini transmis.

Dans le cas où le niveau de qualité associé à l'utilisateur A dans la base de données 96 est supérieur au niveau prédéfini transmis, alors, lors d'une étape 120, le serveur 14 envoie une instruction d'ajout de l'utilisateur A dans la liste 91 de la définition 88 du groupe X au serveur 82. Le serveur 82 modifie alors en conséquence la définition du groupe X et incorpore l'utilisateur A à la liste 91.

A l'issue de l'étape 120, lors d'une étape 122, le serveur 14 envoie au gestionnaire du groupe X une confirmation d'enregistrement de l'utilisateur A en tant que membre du groupe X.

Si le niveau de qualité associé à l'utilisateur A est inférieur au niveau prédéfini transmis, alors, lors d'une étape 124, le module 100 interdit l'ajout de l'utilisateur A dans la liste 91 de la définition du groupe X. Ensuite, lors d'une étape 126, le serveur 14 envoie un refus d'enregistrement au gestionnaire du groupe X.

Dans la suite, on suppose que l'utilisateur A a été ajouté à la liste 91 des membres du groupe X.

Plus tard, l'un quelconque des utilisateurs inscrit dans la liste 91 déclenche une phase 130 d'établissement d'une session PTT entre les différents participants du groupe X.

Par exemple, lors d'une étape 132, le participant A envoie à l'aide de son terminal 6 une instruction « SIP Invite » au serveur 14 comportant en plus des différents paramètres de la session a établir, l'identifiant 90 du groupe X.

Le serveur 14 contacte alors, lors d'une étape 134, le serveur 82 pour récupérer les adresses, c'est-à-dire ici, par exemple, les numéros de téléphones, des différents participants inscrits sur la liste 91, ainsi que le niveau prédéfini de qualité et l'identifiant ou la définition du mode de participation restreinte.

Lors d'une étape 136, le module 20 transmet une instruction « SIP Invite » à chacun des participants inscrits dans la liste 91, ce message SIP Invite contient notamment le niveau prédéfini 92 de qualité ainsi que l'identifiant ou la définition 93 du mode de participation restreinte récupéré lors de l'étape 134.

Le module de gestion de chacun des terminaux ayant reçu l'instruction « SIP Invite » compare, lors d'une étape 138, le niveau actuel de qualité de son propre moyen d'accès au niveau prédéfini reçu et procède en fonction du résultat de cette comparaison, soit à une étape 140, soit à une étape 142.

Les étapes 140 et 142 ainsi que les étapes suivantes 144 et 146 sont respectivement identiques aux étapes 58, 60, 62 et 64, par exemple.

Une fois la session PTT établie, une phase 150 de conversation en mode PTT entre les différents participants débute. Cette phase 150 est, par exemple, identique à la phase 70.

De nombreux autres modes de réalisation du système et du procédé décrits ci-dessus sont possibles. Par exemple, le niveau prédéfini de qualité, ainsi que l'identifiant ou la définition du mode de participation restreinte peuvent être échangés entre les terminaux et le serveur PTT non plus à l'aide du protocole SIP, mais à l'aide de tonalités DTMF.

Les terminaux ont été, ici, décrits comme étant des téléphones mobiles ; en variante, il peut s'agir d'ordinateurs, de téléphones fixes ou d'assistants personnels (PDA) ou encore de tous autres terminaux de téléphonie sans fil.

Les fonctionnalités du serveur PTT et du serveur d'administration de groupe peuvent être regroupées dans un seul et même serveur ou au contraire disséminées dans une multitude de serveurs.

Ici, le mode de participation restreinte est mis en oeuvre uniquement si le niveau de qualité des moyens d'accès utilisés pour participer à la session PTT est inférieur au niveau prédéfini. Toutefois, à l'inverse, un mode de participation restreinte peut être activé uniquement pour des utilisateurs utilisant des moyens d'accès ayant des niveaux de qualité supérieurs au niveau prédéfini, de façon à homogénéiser le niveau de qualité des moyens d'accès utilisés par l'ensemble des participants à une session PTT.

En variante, le mode de participation restreinte n'est pas utilisé, de sorte qu'en cas d'inadéquation entre le niveau de qualité disponible ou choisi et le niveau prédéfini, la participation de l'utilisateur à la session PTT est entièrement interdite.

Dans un autre mode de réalisation, le module de gestion est apte à avertir les participants A et B que l'utilisateur C n'a pas la qualité de service requise, libres à eux de décider d'accepter ou de rejeter la participation du dit utilisateur à la session push-to-talk.

Si l'un des participants A ou B souhaite rejeter la participation de cet utilisateur alors, sous la commande de cet utilisateur A ou B, le module de gestion 26 du participant A ou B est apte à envoyer une instruction de rejet au module de gestion de l'utilisateur C.

Uniquement en réponse à cette instruction de rejet, le module de gestion de l'utilisateur C interdit à ce dernier de prendre la parole. L'utilisateur C est alors soit complètement exclu de la session PTT, soit uniquement autorisé à participer à la session PTT en mode de participation restreinte.

Les étapes de restriction décrites comme étant mises en oeuvre lors de la phase d'établissement peuvent également être, en variante, exécutées au cours du déroulement de la phase de conversation, de manière à adapter les restrictions imposées aux participants au niveau actuel de qualité mesuré et observé en temps réel pour chacun de ces participants.

En variante, les étapes 138, 140 et 142 du procédé de la figure 4 sont omises, de sorte que l'étape de restriction est uniquement exécutée lors de la phase de configuration du groupe de participants.

Le module de gestion propre à restreindre la participation d'un utilisateur à une session PTT peut être implémenté dans chacun des terminaux ou au contraire dans le serveur PTT. Il peut également être implémenté en partie dans les terminaux et en partie dans le serveur 14 sous la forme d'une application client/serveur.

Ici, le niveau actuel de qualité de service de télécommunication est acquis par lecture de ce niveau dans la mémoire 30. En variante, ce niveau actuel de qualité est acquis par la mesure de celui-ci au moment de l'établissement de la session PTT. Cette mesure est, par exemple, réalisée par le module 26.

## Revendications

1. Système de télécommunication comportant :
- des terminaux (6-8) sans fil utilisables sous la commande d'un utilisateur pour participer à une session Push-to-talk, et
- un serveur Push-to-talk (14) raccordé aux terminaux par l'intermédiaire d'un réseau sans fil, ce serveur étant apte à gérer ladite session Push-to-talk, **caractérisé en ce que** le système comporte un module (26 ; 100) de gestion apte à sélectionner un mode de participation restreinte à ladite session Push-to-talk lors de l'établissement de ladite session Push-to-talk en fonction d'un niveau de qualité de service disponible ou choisi et d'un niveau de qualité de service prédéfini pour ladite session Push-to-talk.

2. Système selon la revendication 1, **caractérisé en ce que** ledit mode de participation restreinte consiste en une interdiction à un utilisateur de prendre la parole pendant ladite session Push-to-talk.

3. Système selon la revendication 1, **caractérisé en ce que** ledit mode de participation restreinte consiste à interdire un ajout d'un utilisateur à une définition d'un groupe de participants à ladite session Push-to-talk si le niveau de qualité de service disponible ou choisi est inférieur au niveau prédéfini pour ladite session Push-to-talk.

4. Module de gestion (26; 100) adapté pour être mis en oeuvre dans un système de télécommunication, **caractérisé en ce qu'**il est apte à sélectionner un mode de
participation restreinte à une session Push-to-talk lors de l'établissement de ladite session Push-to-talk en fonction d'un niveau de qualité de service disponible ou choisi et d'un niveau de qualité de service prédéfini pour ladite session Push-to-talk.

5. Procédé de communication mettant en oeuvre :
- des terminaux (6-8) sans fil utilisables sous la commande d'un utilisateur pour participer à une session Push-to-talk, et
- un serveur Push-to-talk (14) raccordé aux terminaux par l'intermédiaire d'un réseau sans fil, ce serveur étant apte à gérer ladite session Push-to-talk,
**caractérisé en ce que** ce procédé comporte une étape (60 ; 124, 142) de sélection d'un mode de participation restreinte à ladite session Push-to-talk lors de l'établissement de ladite session Push-to-talk en fonction d'un niveau de qualité de service disponible ou choisi et d'un niveau de qualité de service prédéfini pour ladite session Push-to-talk.

6. Procédé selon la revendication **caractérisé en ce que** ledit mode de participation restreinte consiste en une interdiction à un utilisateur de prendre la parole pendant la session Push-to-talk.

7. Procédé selon la revendication 5, **caractérisé en ce que** ledit mode de participation restreinte consiste à interdire un ajout d'un utilisateur à une définition d'un groupe de participants à ladite session Push-to-talk si le niveau de qualité de service disponible ou choisi pour participer à ladite session est inférieur au niveau prédéfini.

8. Programme d'ordinateur, **caractérisé en ce qu'**il comporte des instructions pour l'exécution d'un procédé selon l'une quelconque des revendications 5 à 7 lorsque lesdites instructions sont exécutées par un ordinateur.

9. Serveur (14) comportant un module de gestion (100) selon la revendication 4.

10. Serveur selon la revendication 9, **caractérisé en ce qu'**il est apte à transmettre un niveau de qualité de service prédéfini à des terminaux des utilisateurs souhaitant participer à ladite session Push-to-talk.

11. Serveur selon la revendication 9 ou 10 **caractérisé en ce qu'**il est adapté pour être mis en oeuvre dans un système de télécommunication et **en ce qu'**il est apte à créer des définitions de groupes de participants à ladite session Push-to-talk, lesdites définitions contenant un niveau de qualité de service prédéfini.

12. Terminal (6-8) comportant un module de gestion (26) **caractérisé en ce que** ledit module (26) est apte à sélectionner un mode de participation restreinte à une session Push-to-talk lors l'établissement de ladite session Push-to-talk en fonction d'un niveau de qualité de service disponible ou choisi et un niveau de qualité de service prédéfini pour ladite session Push-to-talk.

13. Terminal (6, 7, 8) selon la revendication 12, **caractérisé en ce que** ledit module (26) est apte a lire ledit niveau de qualité de service d'une mémoire (30; 84).

## Claims

1. Telecommunication system comprising:
- wireless terminals (6-8) that can be used under the control of a user in order to participate in a push-to-talk session, and
- a push-to-talk server (14) connected to the terminals via a wireless network, this server being capable of managing said push-to-talk session, **characterized in that** the system comprises a management module (26; 100) capable of selecting a restricted participation mode in said push-to-talk session during the establishment of said push-to-talk session according to an available or chosen quality of service level and to a predefined quality of service level for said push-to-talk session.

2. System according to Claim 1, **characterized in that** said restricted participation mode consists in barring a user from speaking during said push-to-talk session.

3. System according to Claim 1, **characterized in that** said restricted participation mode consists in barring an addition of a user to a definition of a group of participants in said push-to-talk session if the available or chosen quality of service level is below the predefined level for said push-to-talk session.

4. Management module (26; 100) suitable for being used in a telecommunication system, **characterized in that** it is capable of selecting a restricted participation mode in a push-to-talk session during the establishment of said push-to-talk session according to an available or chosen quality of service level and to a predefined quality of service level for said push-to-talk session.

5. Communication method using:
- wireless terminals (6-8) that can be used under the control of a user in order to participate in a push-to-talk session, and
- a push-to-talk server (14) connected to the terminals via a wireless network, this server being capable of managing said push-to-talk session, **characterized in that** this method comprises a step (60; 124, 142) of selecting a restricted participation mode in said push-to-talk session during the establishment of said push-to-talk session according to an available or chosen quality of service level and to a predefined quality of service level for said push-to-talk session.

6. Method according to Claim 5, **characterized in that** said restricted participation mode consists in barring a user from speaking during the push-to-talk session.

7. Method according to Claim 5, **characterized in that** said restricted participation mode consists in barring an addition of a user to a definition of a group of participants in said push-to-talk session if the available or chosen quality of service level for participating in said session is below the predefined level.

8. Computer program, **characterized in that** it comprises instructions for the execution of a method according to any one of Claims 5 to 7, when said instructions are executed by a computer.

9. Server (14) comprising a management module (100) according to Claim 4.

10. Server according to Claim 9, **characterized in that** it is capable of transmitting a predefined quality of service level to terminals of the users wishing to participate in said push-to-talk session.

11. Server according to Claim 9 or 10, **characterized in that** it is suitable for being used in a telecommunication system and **in that** it is capable of creating definitions of groups of participants in said push-to-talk session, said definitions containing a predefined quality of service level.

12. Terminal (6-8) comprising a management module (26) **characterized in that** said module (26) is capable of selecting a restricted participation mode in a push-to-talk session during the establishment of said push-to-talk session according to an available or chosen quality of service level and a predefined quality of service level for said push-to-talk session.

13. Terminal (6, 7, 8) according to Claim 12, **characterized in that** said module (26) is capable of reading said quality of service level from a memory (30; 84).

## Patentansprüche

1. Telekommunikationssystem, das aufweist:
- drahtlose Endgeräte (6-8), die unter der Steuerung durch einen Benutzer verwendbar sind, um an einer Push-to-Talk-Sitzung teilzunehmen, und
- einen Push-to-Talk-Server (14), der an die Endgeräte über ein drahtloses Netzwerk angeschlossen ist, wobei dieser Server die Push-to-Talk-Sitzung verwalten kann,
**dadurch gekennzeichnet, dass** das System ein Verwaltungsmodul (26; 100) aufweist, das einen Modus der beschränkten Teilnahme an der Push-to-Talk-Sitzung beim Aufbau der Push-to-Talk-Sitzung in Abhängigkeit von einem verfügbaren oder gewählten Dienstqualitätsniveau und von einem für die Push-to-Talk-Sitzung vordefinierten Dienstqualitätsniveau auswählen kann.

2. System nach Anspruch 1, **dadurch gekennzeichnet, dass** der Modus der beschränkten Teilnahme aus einem Verbot für einen Benutzer besteht, während der Push-to-Talk-Sitzung das Wort zu ergreifen.

3. System nach Anspruch 1, **dadurch gekennzeichnet, dass** der Modus der beschränkten Teilnahme darin besteht, eine Hinzufügung eines Benutzers zu einer Definition einer Gruppe von Teilnehmern an der Push-to-Talk-Sitzung zu verbieten, wenn das verfügbare oder gewählte Dienstqualitätsniveau unter dem für die Push-to-Talk-Sitzung vordefinierten Niveau liegt.

4. Verwaltungsmodul (26; 100), das geeignet ist, um in einem Telekommunikationssystem eingesetzt zu werden, **dadurch gekennzeichnet, dass** es einen Modus der beschränkten Teilnahme an einer Push-to-Talk-Sitzung beim Aufbau der Push-to-Talk-Sitzung in Abhängigkeit von einem verfügbaren oder gewählten Dienstqualitätsniveau und von einem für die Push-to-Talk-Sitzung vordefinierten Dienstqualitätsniveau auswählen kann.

5. Kommunikationsverfahren, das einsetzt:
- drahtlose Endgeräte (6-8), die unter der Steuerung durch einen Benutzer verwendbar sind, um an einer Push-to-Talk-Sitzung teilzunehmen, und
- einen Push-to-Talk-Server (14), der an die Endgeräte über ein drahtloses Netzwerk angeschlossen ist, wobei dieser Server die Push-to-Talk-Sitzung verwalten kann,
**dadurch gekennzeichnet, dass** dieses Verfahren einen Schritt (60; 124, 142) der Auswahl eines Modus der beschränkten Teilnahme an der Push-to-Talk-Sitzung beim Aufbau der Push-to-Talk-Sitzung in Abhängigkeit von einem verfügbaren oder gewählten Dienstqualitätsniveau und von einem für die Push-to-Talk-Sitzung vordefinierten Dienstqualitätsniveau aufweist.

6. Verfahren nach Anspruch 5, **dadurch gekennzeichnet, dass** der Modus der beschränkten Teilnahme aus einem Verbot für einen Benutzer besteht, während der Push-to-Talk-Sitzung das Wort zu ergreifen.

7. Verfahren nach Anspruch 5, **dadurch gekennzeichnet, dass** der Modus der beschränkten Teilnahme darin besteht, eine Hinzufügung eines Benutzers zu einer Definition einer Gruppe von Teilnehmern an der Push-to-Talk-Sitzung zu verbieten, wenn das verfügbare oder gewählte Dienstqualitätsniveau zur Teilnahme an der Sitzung unter dem vordefinierten Niveau liegt.

8. Computerprogramm, **dadurch gekennzeichnet, dass** es Anweisungen für die Ausführung eines Verfahrens nach einem der Ansprüche 5 bis 7 aufweist, wenn die Anweisungen von einem Computer ausgeführt werden.

9. Server (14), der ein Verwaltungsmodul (100) nach Anspruch 4 aufweist.

10. Server nach Anspruch 9, **dadurch gekennzeichnet, dass** er ein vordefiniertes Dienstqualitätsniveau an Endgeräte der Benutzer übertragen kann, die an der Push-to-Talk-Sitzung teilnehmen möchten.

11. Server nach Anspruch 9 oder 10, **dadurch gekennzeichnet, dass** er geeignet ist, um in einem Telekommunikationssystem eingesetzt zu werden, und dass er Definitionen von Gruppen von Teilnehmern an der Push-to-Talk-Sitzung erzeugen kann, wobei die Definitionen ein vordefiniertes Dienstqualitätsniveau enthalten.

12. Endgerät (6-8), das ein Verwaltungsmodul (26) aufweist, **dadurch gekennzeichnet, dass** das Modul (26) einen Modus der beschränkten Teilnahme an einer Push-to-Talk-Sitzung beim Aufbau der Push-to-Talk-Sitzung in Abhängigkeit von einem verfügbaren oder gewählten Dienstqualitätsniveau und von einem für die Push-to-Talk-Sitzung vordefinierten Dienstqualitätsniveau auswählen kann.

13. Endgerät (6, 7, 8) nach Anspruch 12, **dadurch gekennzeichnet, dass** das Modul (26) das Dienstqualitätsniveau aus einem Speicher (30; 84) auslesen kann.
